# EUROPÄISCHE PATENTSCHRIFT

(11) **EP 2 489 799 B1**
(45) Veröffentlichungstag und Bekanntmachung des Hinweises auf die Patenterteilung: **20.08.2014**
(21) Anmeldenummer: 11001252.3
(22) Anmeldetag: 16.02.2011
(51) Int. Cl.: E03F 5/22, F16L 37/26

(54) **Abwasserhebeanlage**
Waste water hoisting facility
Installation de relèvement d'eaux usées

(43) Veröffentlichungstag der Anmeldung: 22.08.2012
(73) Patentinhaber: Grundfos Management a/s, 8850 Bjerringbro (DK)
(72) Erfinder: Schomäcker, Ralf, 33739 Bielefeld (DE); Casalini, Luca, 56025 Pontedera (PI) (IT); Iacoponi, Alessandro, San Lorenzo a Pagnatico (Cascina) Pina (IT)
(74) Vertreter: Hemmer, Arnd

(56) Entgegenhaltungen:
- WO-A1-97/48939
- WO-A1-2004/067864
- DE-B- 1 059 727
- US-A- 4 886 426
- US-A1- 2008 087 671

## Beschreibung

Gegenstand der Erfindung ist auch eine Abwasserhebeanlage gemäß dem Oberbegriff des Anspruchs 1.

Abwasserhebeanlagen werden eingesetzt, um Abwässer, welche unterhalb eines Niveaus einer Kanalisation anfallen, auf das Niveau der Kanalisation zu heben bzw. zu pumpen. Dazu sind Abwasserhebeanlagen bekannt, welche einen Behälter aufweisen, in welchen das zu pumpende Abwasser einströmt. An oder in dem Behälter ist ein pumppenaggregat angeordnet, welches das Wasser aus dem Behälter in eine Abwasserleitung auf höherem Niveau pumpt.

Es sind solche Anlagen bekannt, welche einen geschlossenen Behälter aus Kunststoff aufweisen, in welchen das Pumpenaggregat durch eine Öffnung eingesetzt ist. Diese Behälter weisen auch alle erfordedichen Anschlussleitungen, insbesondere auch ein Auslassanschluss, welcher sich ausgangsseitig an das Pumpenaggregat anschließt, auf. D. h. es muss im Inneren des Behälters eine Verbindung zwischen der Ausgangsseite der Pumpe und einer sich anschließenden Druckleitung bzw. einem sich anschließenden Auslassanschluss hergestellt werden. Dies ist schwierig, da der Behälter in der Regel von außen nicht einsehbar ist. Insbesondere ist es problematisch, das Pumpenaggregat zu Wartungzwecken zu entnehmen und wieder anzuschließen, ohne die gesamte Anlage zu deinstallieren.

US 2008/087671 A1 offenbart einen Flüssigkeitsspeicher, beispielsweise für Wasser, welcher einen Tank und eine darin angeordnete Pumpen einheit aufweist. Die Pumpeneinheit ist über eine lösbare Kupplung mit einer an dem Tank angebrachten Auslosseinleitung verbunden. Die beiden Küpplungsteile können in einer Einsetzrichtung, in welcher die Pumpeneinheit in dem Tank eingesetzt wird, ineinander geschoben werden. Dabei ist es erforderlich, die gesamte Pumpeneinheit exakt zu der Kupplung in dem Tank auszurichten, um die Kupplung zu verbinden.

WO 2004/067864 A1 offenbart eine Schnellkupplung, mittets welcher eine Tauchpumpe in einem Behälter fixiert wird. Auch hier ergibt sich die Schwierigkeit der exakten Positionierung der Kupplungselemente zur Verbindung.

Es ist daher Aufgabe der Erfindung, eine verbesserte Abwasserhebeanlage bereitzustellen, welche ein einfaches Einsetzen eines Pumpenaggregates in einen Behälter mit einer einfachen Verbindung mit einer Druck- bzw. Auslassleitung im Inneren des Behälters ermöglicht.

Diese Aufgabe wird durch eine Abwasserhebeanlage mit den in Anspruch 1 angegebenen Merkmalen gelöst. Bevorzugte Ausführungsformen ergeben sich aus den Unteransprüche, der nachfolgenden Beschreibung sowie den beigefügten Figuren.

Die erfindungsgemäße Abwasserhebeanlage weist wie bekannte Abwasserhebeanlagen einen Behälter auf, welcher zumindest eine Einlassöffnung aufweist, an welcher eine eingangsseitige Abwasserleitung oder ein WC angeschlossen ist, durch welche das zu fördernde bzw. das zu hebende Abwasser in den Behälter einströmt. Darüber hinaus ist in dem Behälter zumindest eine Pumpe bzw. ein Pumpenaggregat angeordnet, welches das Abwasser aus dem Behälter heraus in eine höher gelegene Abwasserleitung pumpt. Zusätzlich kann in dem Behälter ein Füllstandsensor zum Ein- und Ausschalten des Pumpenaggregates in Abhängigkeit des Wasserstandes im Inneren des Behälters vorgesehen sein. Je nach Größe der Abwasserhebeanlage können auch mehrere Pumpen in dem Behälter angeordnet sein.

Das Pumpenaggregat weist einen Druck- bzw. Auslassstutzen auf, welcher im Inneren des Behälters mit einer in diesem angeordneten Auslassleitung verbunden ist. Diese Auslassleitung führt aus dem Behälter hinaus und endet vorzugsweise an der Außenseite des Behälters in einem Auslassanschluss, an welchen eine ausgangsseitige Abwasserleitung angeschlossen werden kann, welche dann beispielsweise zu einem höher gelegenen Kanalrohr führt.

Um das Pumpenaggregat mit der Auslassleitung im Inneren des Behälters leicht verbinden zu können und darüber hinaus das Pumpenaggregat auf einfache Weise an dem Behälter montieren zu können, ist dieses durch eine Öffnung in einer Wandung des Behälters in diesen eingesetzt und auch wieder entnehmbar. So kann zu Wartungszwecken oder zum Austausch das Pumpenaggregat durch die Öffnung leicht wieder entfernt werden. Darüber hinaus ist der Auslassstutzen, welcher an dem Pumpenaggregat ausgebildet ist, d. h. der Druckstutzen des Pumpenaggregates, mit der in dem Behälter angeordneten Auslassleitung über eine lösbare Kupplung verbunden. Dabei ist die Kupplung so ausgebildet, dass diese in Einsetzrichtung des Pumpenaggregates verbind- und wieder lösbar ist. Die Einsetzrichtung ist dabei diejenige Richtung, in welcher das Pumpenaggregat durch die Öffnung in den Behälter eingesetzt wird. Beispielsweise wird das Pumpenaggregat durch eine Öffnung an der Oberseite des Behälters von oben in den Behälter eingesetzt. Dann ist die Einsetzrichtung die vertikale Richtung. Dadurch, dass die Kupplung in der Einsetzrichtung verbind- und lösbar ist, ist es möglich, dass die Kupplung beim Einsetzen des Pumpenaggregates automatisch verbunden und wieder gelöst wird, sodass zur Anbindung der Auslassieltung an den Auslassstutzen des Pumpenaggregates, welcher beispielsweise an einem Spiralgehäuse des Pumpenaggregates ausgebildet ist, keine weiteren komplizierten Montagetätigkeiten erforderlich sind. Idealerweise wird so beim Einsetzen des Pumpenaggregates in die Öffnung der Behälterwandung gleichzeltig die Verbindung des Auslassstufzens mit der Auslassleitung hergestellt.

Dabei weist die Kupplung einen ersten Kupplungsteil auf, welcher an dem Auslassstutzen des Pumpenaggregates angeordnet ist und einen zweiten Kupplungsteil, welcher an der Austassleitung angeordnet ist, welche lösbar miteinander in Eingriff sind bzw. in Eingriff treten können. Wie oben beschrieben, soll die Kupplung in Einsetzrichtung verbind- und lösbar sein, d. h. die beiden Kupplungsteile werden in Ensetzrichtung aneinander bzw. ineinander gefügt. Auf diese Weise wird die Kupplung automatisch beim Einsetzen des Pompenaggregates in die Öffnung verbunden.

Der erste Kupplungsteil und der zweite Kupplungsteil sind vorzugsweise in einer Dichtebene miteinander in Kontakt, welche sich parallel zu der Einsetzrichtung erstreckt. D. h. der erste Kupplungsteil und der zweite Kupplungsteil werden in der Dichtebene gegeneinander verschoben bis sie in der endgültigen gegenüberliegenden Position sind, in welcher ein gedichteter Fluiddurchgang von den Auslassstutzen in die Auslassleitung durch die Kupplungsteile hindurch hergestellt wird. Der erste Kupplungsteil und der zweite Kupplungsteil treten somit entlang der Dichtebene beim Fügen vorzugsweise gleitend miteinander in Kontakt.

Erfindungsgemäß ist der zweite Kupplungsteil derart beweglich, dass er sich selbsttätig zu dem anderen Kupplungsteil ausrichten kann. Auf diese Weise wird der Fügevorgang und der Verbindungsvorgang zwischen der Auslassleitung und dem Auslassstutzen weiter vereinfacht, da diese sich mit ihren Kupplungsteilen selbsttätig so zueinander ausrichten können, dass sie in dichtende Verbindung miteinander treten. Insbesondere ist die Bewegung derart möglich, dass beide Kupplungsteile mit ihren Anlageflächen, mit welchen die Kupplungsteile miteinander in Anlage treten, sich in Richtung der Dichtebene ausrichten können.

Vorzugsweise ist zumindest einer der Kupplungsteile, besonders bevorzugt der zweite Kupplungsteil, in einer Ebene parallel zur Einsetzrichtung beweglich. Dies ermöglicht es, dass sich die Kupplungsteile parallel zu der Dichtebene relativ zu einander bewegen können, sodass die Kupplungsteile sich selbsttätig in gegenüberliegender Lage zueinander ausrichten können, sodass die in definierter Position miteinander in Eingriff treten können.

Alternativ oder zusätzlich ist es möglich, dass zumindest einer der Kupplungsteile, vorzugsweise der zweite Kupplungsteil, um zumindest eine Schwenkachse schwenkbeweglich ist. Dies ermöglicht es, dass sich die Kupplungsteile auch in ihrer Winkellage zueinander ausrichten, insbesondere so, dass ihre Anlageflächen, mit welchen sie miteinander in Kontakt treten, sich selbsttätig parallel zu der Dichtebene ausrichten können.

Dazu erstreckt sich die zumindest eine Schwenkachse vorzugsweise in der oder parallel zu der Dichtebene, in welcher die beiden Kupplungsteile mit ihren Anlagefläche miteinander in Kontakt treten.

Der zweite Kupplungsteil, d. h. der Kupplungsteil, welcher an der in dem Behälter angeordneten Auslassleitung angeordnet ist, weist weiter bevorzugt zwei zueinander und zu der Einsetzrichtung parallele Führungen auf, in welche der erste Kupplungsteil in Einsetzrichtung einschiebbar ist. Auf diese Weise können die beiden Kupplungsteile beim Einsetzen des Pumpenaggregates gleitend aneinander entlang in ihre endgültige gegenüberliegende Lage bewegt werden, wobei der erste Kupplungsteil an dem zweiten Kupplungsteil durch die Führungen in Einsetzrichtung geführt wird. Die Führungen können gleichzeitig eine axiale Sicherung darstellen, welche die Kupplungsteile in axialer Richtung aneinander in Anlage hält. Die axiale Richtung ist dabei die Erstreckungsrichtung des Auslassstutzens und der Auslassleitung, welche sich vorzugsweise quer zu der Einsetzrichtung erstreckt. Die Führungen sind vorzugsweise in ihrem Querschnitt quer zur Einsetzrichtung u-förmig ausgebildet und der erste Kupplungsteil weist seitlich auskragende Führungsstege auf, welche sich parallel zu der Einsetzrichtung erstrecken und in den Innenraum der u-förmigen Führungen eingreifen. Die Führungen bilden somit Führungsnuten, in denen der erste Kupplungsteil verschiebbar ist. Die u-förmigen Führungen begrenzen die Beweglichkeit des ersten Kupplungsteils in dem zweiten Kupplungsteil vorzugsweise in drei Richtungen, nämlich in den beiden Axialrichtungen sowie in einer Richtung quer zu dieser, sodass eine Bewegung zwischen den beiden Kupplungsteilen nur in der Einsetzrichtung möglich ist. Dabei ist für die endgültige Verbindungslage, in welcher die beiden Kupplungsteile sich wie gewünscht gegenüberliegen, vorzugsweise ein Anschlag vorgesehen, sodass die Bewegung auch ein Einsetzrichtung durch einen Anschlag in der Endlage begrenzt ist, sodass der erste Kupplungsteil nicht über diese Endlage hinaus weiter in den zweiten Kupplungsteil einschiebbar ist.

Ferner ist die Auslassleitung zumindest abschnittsweise elastisch verformbar ausgebildet, beispielsweise aus einem Elastomer oder Gummi, und an ihrem Ende mit dem zweiten Kupplungsteil verbunden. Vorzugsweise greift die Auslassleitung in den zweiten Kupplungsteil ein und ist in diesem fixiert. Dabei kann sich die Auslassleitung soweit in den zweiten Kupplungsteil hineinerstrecken, dass sie sich durch diesen in axialer Richtung hindurch bis zu dem ersten Kupplungsteil bzw. dem Auslassstutzen hin erstreckt. Auf diese Weise wird eine zusätzlich Abdichtung zwischen der Auslassleitung und dem zweiten Kupplungsteil vermieden, da die Auslassleitung direkt mit dem ersten Kupplungsteil bzw. dem Auslassstutzen dichtend in Anlage treten kann. Der zweite Kupplungsteil dient dann lediglich der Führung und der Fixierung der Auslassleitung an dem ersten Kupplungsteil bzw. dem Auslassstutzen. Vorzugsweise ist eine formschlüssige Verbindung zwischen der Auslassleitung und dem zweiten Kupplungsteil vorgesehen. Beispielsweise kann die Auslassleitung mit Eingriffselemente formschlüssig mit korrespondierenden Eingriffselementen an bzw. in dem zweiten Kupplungsteil in Eingriff treten. So können an der Auslassleitung Eingriffsvorsprünge ausgebildet sein, welche in korrespondierenden Ausnehmungen in dem Kupplungsteil formschlüssig eingreifen. Die elastische Verformbarkeit der Auslassleitung ermöglicht eine Beweglichkeit, welche die Ausrichtung der beiden Kupplungsteile zueinander ermöglicht. Darüber hinaus ermöglicht sie eine einfachere Verlegung bzw. Montage im Inneren des Behälters.

Die Auslassleitung ist in einer Lagerung im Inneren des Behälters gelagert, wobei die Lagerung derart ausgestaltet ist, dass die Beweglichkeit des zweiten Kupplungsteiles am Ende der Auslassleitung gewährleistet ist. Die Auslassleitung kann direkt in der Lagerung gelagert sein oder aber indirekt über den zweiten Kupplungsteil. So ist es möglich, dass der zweite Kupplungsteil in der Lagerung gelagert ist und die Auslassleitung wie vorangehend beschrieben an bzw. in dem zweiten Kupplungsteil fixiert ist. Die Lagerung ist dabei vorzugsweise so ausgestaltet, dass sie das erforderliche Spiel aufweist, um die Beweglichkeit des zweiten Kupplungsteils zu gewährleisten. So ist der zweite Kupplungsteil vorzugsweise relativ zu der Lagerung bzw. in der Lagerung über ein gewisses Maß beweglich, um die Beweglichkeit relativ zu dem ersten Kupplungsteil und die selbsttätige Ausrichtung sicherzustellen. Das Pumpenaggregat mit seinem Auslassstutzen ist beim Einsetzen vorzugsweise in seiner Ausrichtung und Lage in dem Behälter fixiert, sodass es relativ zu der Lagerung fest ausgerichtet ist und die Beweglichkeit zwischen den Kupplungsteilen durch die relative Beweglichkeit des zweiten Kupplungsteiles in der Lagerung realisiert wird.

Die Lagerung kann beispielsweise so ausgestaltet sein, dass der zweite Kupplungsteil über Halteelemente im Inneren des Behälters fixiert ist, wobei in den Halteelementen das erforderliche Spiel zur Beweglichkeit des Kupplungsteils gegeben ist. Die Halteelemente können beispielsweise mit einer Innenwandung des Behälters verschraubt.sein.

Um ein leichtes Einsetzen des ersten Kupplungsteils in dem zweiten Kupplungsteil unter Entlanggleiten der beiden Kupplungsteile aneinander beim Einsetzen zu gewährleisten, kann an einem der Kupplungsteile ein Anlage- bzw. Dichtelement aus Kunststoff mit den gewünschfen Gleiteigenschaften vorgesehen sein, welches an einer gegenüberliegenden Gleit- bzw. Dichtfläche entlanggleitet. Vorzugsweise ist dieses Element stirnseitig auf die elastische Austrittsleitung aufgesetzt, sodass dieses Element durch die Elastizität der Austrittsleitung mit einer gegenüberliegenden Dichtfläche in Anlage gehalten wird, sodass hier eine ausreichende Dichteigenschaft gegeben ist, ohne dass eine elastische Dichtung mit schlechteren Gleiteigenschaften angeordnet werden müsste.

Nachfolgend wird die Erfindung beispielhaft anhand der beigefügten Figuren beschrieben. In diesen zeigt:

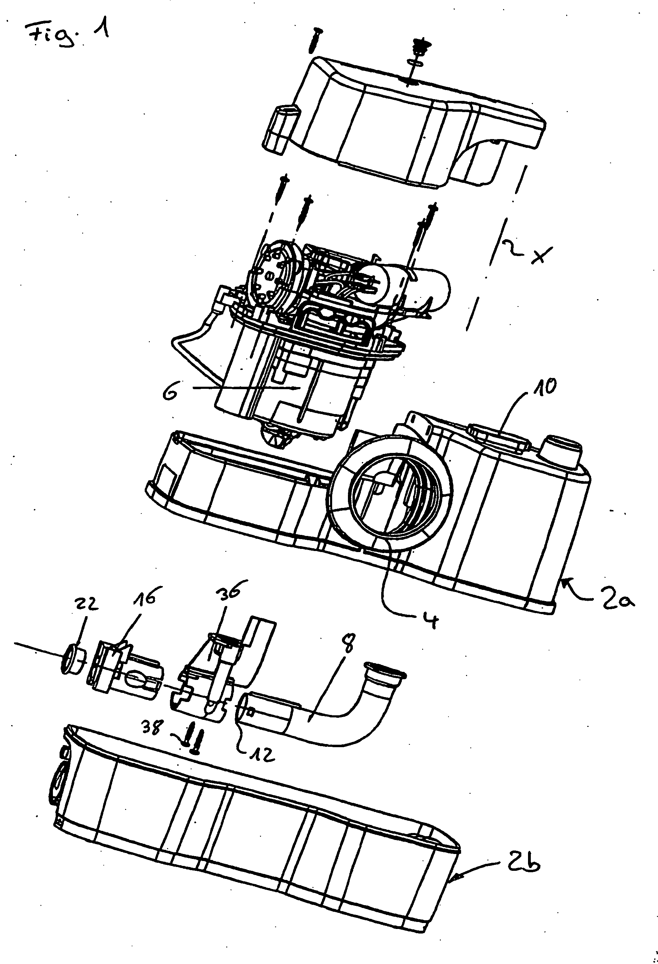

- Fig. 1: in einer Explosionsansicht eine Abwasserhebeanlage gemäß der Erfindung,
- Fig. 2: eine Schnittansicht der Abwasserhebeanlage gemäß Fig. 1,
- Fig. 3: eine vergrößerte Ansicht der Ausschnitts III in Fig. 2,
- Fig. 4: eine vergrößerte Ansicht des Ausschnittes IV in Fig. 3,
- Fig. 5: eine Schnittansicht normal zu der Schnittansicht in Fig. 3 entlang der Linie V in Fig. 3,
- Fig. 6: eine Schnittansicht entlang der Linie VI in Fig. 2 und
- Fig. 7A - 7C: in drei Schritten die Verbindung des Auslassstutzens des Pumpenaggregates mit der Auslassleitung.

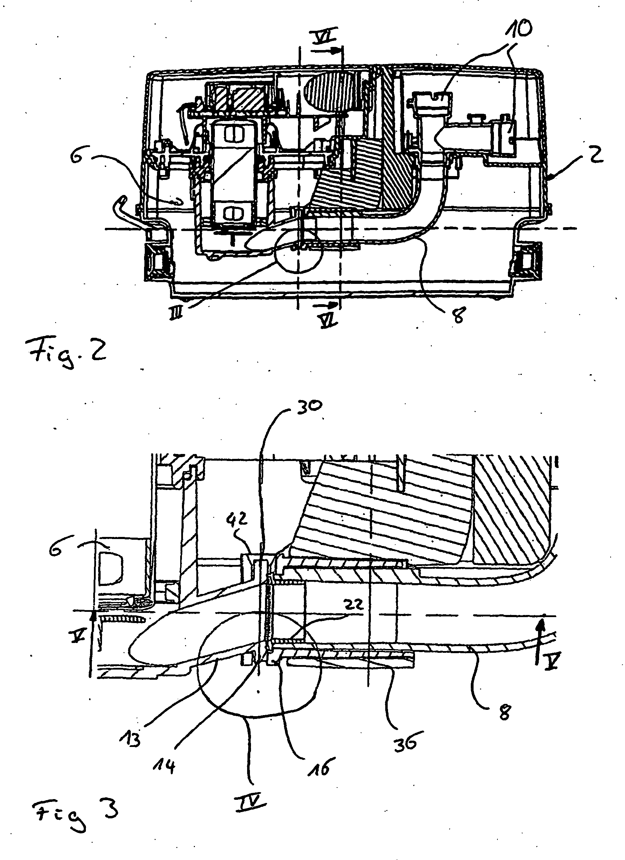

Die in diesem Beispiel gezeigte Abwasserhebeanlage weist einen Behälter 2 auf, welcher aus zwei Behälterteilen 2a und 2b zusammengesetzt ist. Die Behälterteile 2a und 2b sind vorzugsweise aus Kunststoff ausgebildet. Der Behälter 2 weist eine Eintrittsöffnung 4 zum Anschluss einer Abwasserleitung, beispielsweise von einem Sanitärobjekt wie einer Toilette kommend, auf. Im Inneren des Behälters 2 ist ein Pumpenaggregat 6 angeordnet, welches dazu dient, dass sich in dem Behälter 2 ansammelnde Abwasser, welches durch die Eintrittsöffnung 4 einströmt, aus dem Behälter 2 auf ein höheres Niveaus herauszupumpen. Dazu ist in dem Behälter 2 zum Ein- und Ausschalten der Pumpe ein hier nicht gezeigte Niveauschalter angeordnet, welcher die Pumpe 6 beim Erreichen eines vorbestimmten Wasserstandes in dem Behälter 2 einschaltet und beim Absinken auf einen zweiten niedrigen vorbestimmten Wasserstand wieder ausschaltet. Die Pumpe ist ausgangsseitig mit einer im Inneren des Behälters 2 angeordneten Auslassleitung 8 verbunden, welche zu einem Auslassanschluss 10 führt. Bei der Ausführungsform gemäß Fig. 2 sind im Inneren des Behälters 2 zwei Auslassanschlüsse 10 zum wahlweisen Anschluss einer sich anschließenden Druckleitung vorgesehen. An ihrem freien Ende 12 ist die Auslassleitung 8 mit dem Pumpenaggregat 6 verbunden. Wie am besten in Fg. 7A - 7C, welche nur das untere Teil des Pumpenaggregates 6 zeigen, zu sehen ist, weist das Pumpenaggregat 6 an seinem Pumpengehäuse einen Auslassstutzen bzw. Druckstutzen 13 auf, welcher an seinem freien Ende ein ersten Kupplungsteil 14 trägt. Dieser erste Kupplungsteil 14 kann lösbar mit einem zweiten Kupplungsteil 16 in Eingriff treten, welcher am freien Ende 12 der Auslassleitung 8 angeordnet ist.

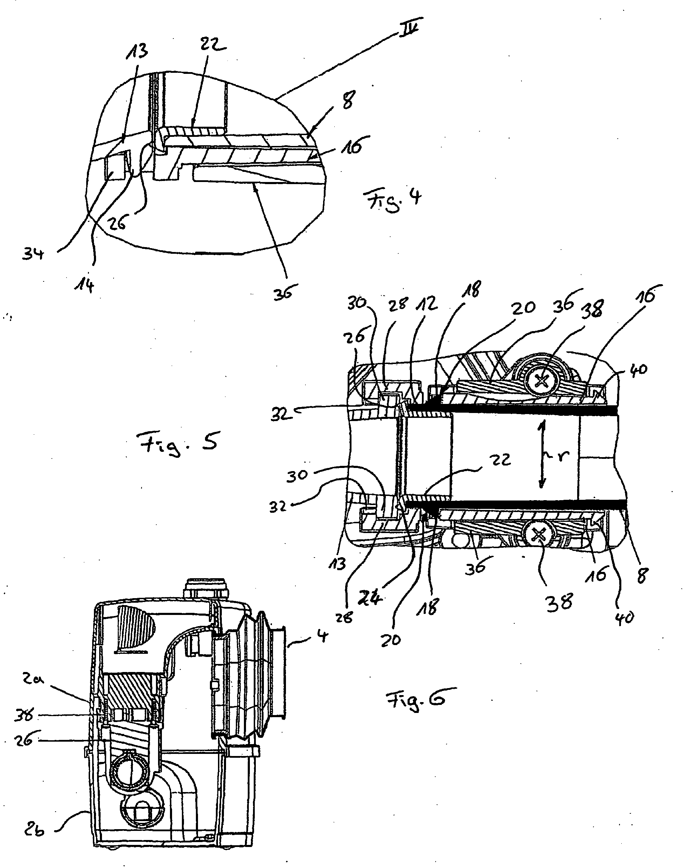

Der zweite Kupplungsteil 16 der gebildeten Kupplung ist auf das freie Ende 12 der Auslassleitung 8 aufgesteckt. Die Auslassleitung 8 ist vorzugsweise elastisch, beispielsweise aus einem Elastomermaterial wie Gummi, ausgebildet. Zur Fixierung der Auslassleitung 8 mit dem Ende 12 in dem Kupplungsteil 16 ist in diesem Ausführungsbeispiel ein formschlüssiger Eingriff vorgesehen. Wie in der Schnittansicht in Fig. 5 zu erkennen ist, sind am Ende 12 des Auslassleitung 8 zwei diametral entgegengesetzt nach außen auskragende Rastnasen 18, welche in Ausnehmungen 20 im Kupplungsteil 16 eingreifen, ausgebildet. Der Kupplungsteil 16 ist im Übrigen hülsen- bzw. rohrförmig ausgebildet und weist einen im Wesentlichen kreisförmigen Innendurchmesser auf, welcher geringfügig größer ist als der Außendurchmesser der Auslassleitung 8. Auf diese Weise kann die Auslassleitung 8 so in den Kupplungsteil 16 eingeführt werden, dass sie sich durch diesen von einem Ende zum entgegengesetzten Ende hindurcherstreckt und mit den Rastnasen 18 in die Ausnehmungen 20 eingreift. In das Innere des freien Endes 12 ist nach dem Einsetzen der Auslassleitung 8 in den zweiten Kupplungsteil 16 eine Haltehülse 22 eingesetzt. Die Haltehülse 22 ist aus einem starren Material, vorzugsweise aus Kunststoff, ausgebildet, und weist einen Außendurchmesser auf, welcher im Wesentlichen dem Innendurchmesser der Auslassleitung 8 an deren Ende 12 entspricht. Auf diese wird bei eingesetzter Haltehülse 22 sichergestellt, dass die Rastnasen 18 in die Ausnehmungen 20 gedrückt werden. Hierzu weist die Haltehülse 22 eine derartige axiale Länge auf, dass sie sich vom Ende der Auslassleitung 8 in diese soweit hineinerstreckt, dass sie an der Innenseite die Rastnasen 18 überdeckt. D. h. die Haltehülse 22 weist eine axiale Länge auf, welche größer ist als der Abstand der Rastnasen 18 vom Ende des Auslassleitung 8.

An ihrem dem Pumpenaggregat 6 zugewandten Ende weist die Haltehülse 22 einen radial nach außen auskragenden Kragen 24 auf, welcher die Stirnseite der Auslassleitung 8 überdeckt. Dem Pumpenaggregat 6 bzw. dem Auslassstutzen 13 zugewandt, weist der Kragen 24 einen in axialer Richtung gerichteten ringförmigen Anlagevorsprung 26 auf, welcher mit der Stirnseite des Auslassstutzens 13 in dichtende Anlage kommt. Der Anlagevorsprung 26 dichtet somit die Auslassleitung 8 gegen den Auslassstutzen 13 ab. Die Haltehülse 22 dichtet dabei gleichzeitig gegen die Stirnseite der Auslassleitung 8 und gegen den Innenumfang der Auslassleitung ab, sodass hier neben der Haltehülse 22 kein weiteres Dichtelement erforderlich ist. Aufgrund der Elastizität der Auslassleitung 8 wird die Haltehülse 22 in axialer Richtung gegen die Stirnseite des Auslassstutzens 13 gedrückt. D. h. Aufgrund der Ausgestaltung der Kupplungsteile 14 und 16 wird der Auslassstutzen 13 mit einer gewissen Anlagekraft gegen den Anlagevorsprung 26 gedrückt, sodass die Auslassleitung 8 elastisch verformt wird und eine Andruckkraft erzeugt wird, welche die Haltehülse 22 mit dem Anlagevorsprung 26 in dichtender Anlage an der Stirnseite des Auslassstutzens 13 hält.

Die Kupplungsteile 14 und 16 sind so ausgebildet, dass der zweite Kupplungsteil 16 an seinem dem Pumpenaggregat 6 zugewandten Ende eine Aufnahme aufweist, welche zwei einander gegenüberliegende Führungen bzw. Aufnahmenuten 28 aufweist. Die Aufnahmenuten 28 liegen einander gegenüber und erstrecken sich parallel zueinander in vertikaler Richtung X. Die vertikale Richtung X ist dabei die Einsetzrichtung, in welcher das Pumpenaggregat 6 in den Behälter 2 von oben eingesetzt wird. Der erste Kupplungsteil 14 ist plattenförmig ausgebildet und weist an zwei diametral entgegengesetzten Seiten nach außen auskragende Führungsstege 30 auf, welche so dimensioniert und angeordnet sind, dass sie in die Aufnahmenuten 28 von oben eingeschoben werden können. Dabei hintergreift der zweite Kupplungsteil 16 mit seinen die Aufnahmenuten 28 axialseitig begrenzenden Schultern 32 die Führungsstege 30, welche am Ende des Auslassstutzens 13 ausgebildet sind, axialseitig. Auf diese Weise wird der Auslassstutzen 13 mit dem ersten Kupplungsteil 14 in axialer Richtung mit dem zweiten Kupplungsteil 16 fixiert. Gleichzeitig erfolgt eine Fixierung in radialer Richtung bezogen auf die Erstreckungsrichtung der Auslassleitung 8 und des zweiten Kupplungsteiles 16 durch die Form der seitlich angeordneten Aufnahmenuten 28. Am unteren Ende ist der zweite Kupplungsteil 16 im Bereich der Aufnahmenuten 28 so ausgebildet, dass ein Anschlag 34 sich ausgehend von den Schultern 32 in den Freiraum zwischen den gegenüberliegenden Ausnahmenuten 28 hineinerstreckt. Dieser Anschlag 34 kann als ein die Schultern 32 am unteren Ende verbindender Steg ausgebildet sein. Wenn der erste Kupplungsteil 14 vollständig in den zweiten Kupplungsteil 16 eingeschoben ist, kommt, wie in Fig. 4 zu sehen ist, der Auslassstutzen 13 auf dem Anschlag 34 zu liegen, sodass ein weiteres Einschieben in die Aufnahmenuten 28 in vertikaler Richtung X nicht mehr möglich ist.

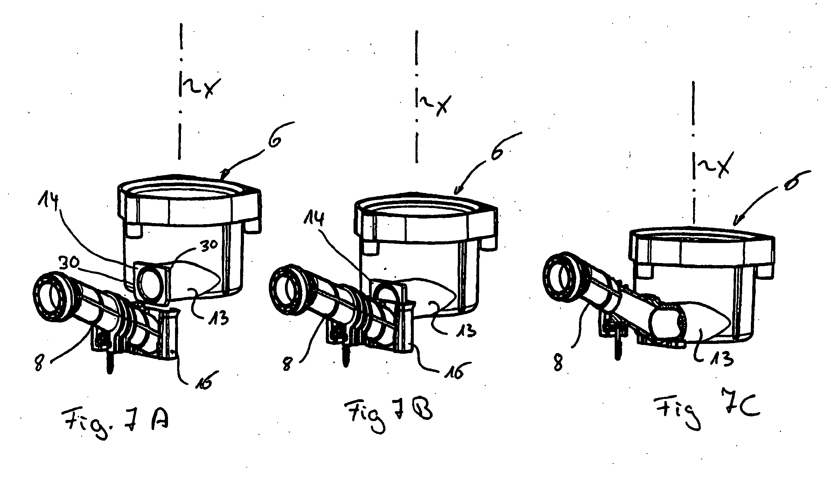

Die Haltehülse 22 mit dem Anlagevorsprung 26 ist vorzugsweise aus einem harten Kunststoffmaterial ausgebildet, welches gute Gleiteigenschaften aufweist. Diese guten Gleiteigenschaften werden insbesondere durch die nur kleine Stirnfläche des Anlagevorsprunges 26 realisiert. Auf diese Weise wird sichergestellt, dass der Anlagevorsprung leicht an der Stirnseite des Auslassstutzens 13 und der Führungsstege 30 entlanggleiten kann, wenn das erste Kupplungsteil 14, welcher plattenförmig mit den seitlichen Führungsstege 30 ausgebildet ist, von oben in die Aufnahmenuten 28 des zweiten Kupplungsteils 16 eingeschoben wird. Dieses Einschieben ist schematisch anhand der Figuren 7A - 7C gezeigt.

Erfindungsgemäß ist, um ein leichtes Einschieben des ersten Kupplungsteils 14 in den zweiten Kupplungsteil 16 zu ermöglichen, der zweite Kupplungsteil 16 so angeordnet, dass er sich selbsttätig relativ zu dem ersten Kupplungsteil 14 ausrichten kann. Dies erfolgt dadurch, dass der zweite Kupplungsteil 16 in einem Lagerelement 36, welches den zweiten Kupplungsteil 16 vom Außenumfang her umgreift, gehalten ist. Das Lagerelement 36 ist über Schrauben 38 fest mit dem Behälter 2 verbunden. Der hülsenförmige zweite Kupplungsteil 36 erstreckt sich durch das ebenfalls hülsenförmige Lagerelement 36 hindurch und hintergreift dies an der dem Pumpenaggregat 6 abgewandten Stirn- bzw. Endseite mittels zweier radial nach außen auskragender Rastnasen 40. Dabei weist das Lagerelement 36 in seinem Inneren eine Größe auf, welche zumindest in der radialen Richtung r quer zur Einsetzrichtung X größer ist als der Außenumfang des zweiten Kupplungsteils 16. Auf diese Weise wird erreicht, dass der zweite Kupplungsteil 16 mit Spiel in radialer Richtung r im Inneren des Lagerelementes 36 gehalten wird. Dies ermöglicht es, dass der zweite Kupplungsteil 16 sich um ein bestimmtes Maß in Richtung r relativ zu dem Lagerelement 36 und damit relativ zu dem Behälter 2 und somit auch relativ zu dem ersten Kupplungsteil 14 bewegen kann und sich selbsttätig so gegenüberliegend zu dem ersten Kupplungsteil 14 ausrichten kann, dass dieses mit den Führungsstegen 30 in die Aufnahmenuten 28 eingeführt werden kann. Um dieses Einführen zusätzlich zu erleichtern, sind die Aufnahmenuten 28 an ihrem oberen Ende 42, wie in Fig. 3 zu sehen ist erweitert ausgebildet. Dabei ist die Erweiterung schräg ausgebildet, sodass eine Führung für die Führungsstege 30 in die Aufnahmenuten 28 hinein gebildet wird. Aufgrund der Elastizität der Auslassleitung 8 kann sich diese gemeinsam mit dem zweiten Kupplungsteil 16 um ein bestimmtes Maß im Inneren des Behälters bewegen.

In diesem Ausführungsbeispiel ist die Einsetzrichtung die vertikale Richtung **X.** Es ist jedoch zu verstehen, dass je nach Ausgestaltung der Abwasserhebeanlage die Einsetzrichtung auch eine andere Richtung sein kann. Dann werden die Aufnahmenuten 28 und die Eingriffvorsprünge 30 entsprechend anders ausgerichtet, sodass sie sich parallel zur Einsetzrichtung erstrecken, in welcher das Pumpenaggregat 6 in den Behälter 2 eingesetzt wird.

### Bezugszeichenliste

| | | |
|---|---|---|
| 2 | - | Behälter |
| 2a, 2b | - | Behälterteile |
| 4 | - | Eintrittsöffnung |
| 6 | - | Pumpenaggregat |
| 8 | - | Auslassleitung |
| 10 | - | Auslassanschluss |
| 12 | - | Ende der Auslassleitung 8 |
| 13 | - | Auslassstutzen |
| 14 | - | erster Kupplungsteil |
| 16 | - | zweiter Kupplungsteil |
| 18 | - | Rastnasen |
| 20 | - | Ausnehmungen |
| 22 | - | Haltehülse |
| 24 | - | Kragen |
| 26 | - | Anlagevorsprung |
| 28 | - | Aufnahmenuten |
| 30 | - | Führungsstege |
| 32 | - | Schulter |
| 34 | - | Anschlag |
| 36 | - | Lagerelement |
| 38 | - | Schrauben |
| 40 | - | Rastnasen |
| 42 | - | oberes Ende der Aufnahmenuten 28 |
| | | |
| X | - | vertikale Richtung, Fügerichtung |
| r | - | radiale Richtung |

## Patentansprüche

1. Abwasserhebeanlage mit einem Behälter (2) und zumindest einem darin angeordneten Pumpenaggregat (6), wobei das Pumpenaggregat (6) einen Auslassstutzen (13) aufweist, welcher mit einer Auslassleitung (8) verbunden ist, wobei das Pumpenaggregat (6) durch eine Öffnung in einer Wandung des Behälters in diesen wieder entnehmbar eingesetzt ist und der Auslassstutzen (13) mit der Auslassleitung (8) über eine in Einsetzrichtung (X) des Pumpenaggregates (6) lösbare Kupplung (14, 16) verbunden ist, und wobei die Kupplung einen ersten Kupplungsteil (14) an dem Auslassstutzen (13) und einen zweiten Kupplungsteil (16) an der Auslassleitung (8) aufweist, welche lösbar mit einander in Eingriff sind, **dadurch gekennzeichnet, dass** der zweite Kupplungsteil (16) derart beweglich ist, dass er sich selbsttätig zu dem anderen Kupplungsteil (14) ausrichten kann, wobei die Auslassleitung (8) zumindest abschnittweise elastisch verformbar ausgebildet ist, an ihrem Ende mit dem zweiten Kupplungsteil (16) verbunden ist, und in einer Lagerung (36) im Inneren des Behälters (2) gelagert ist, wobei die Lagerung (36) derart ausgestaltet ist, dass die Beweglichkeit des zweiten Kupplungsteils (16) am Ende der Auslassleitung (8) gewährleistet ist.

2. Abwasserhebeanlage nach Anspruch 1, **dadurch gekennzeichnet, dass** der erste Kupplungsteil (14) und der zweite Kupplungsteil (16) in einer Dichtebene miteinander in Kontakt sind, welche sich parallel zu der Einsetzrichtung (X) erstreckt.

3. Abwasserhebeanlage nach einem der vorangehenden Ansprüche, **dadurch gekennzeichnet, dass** zumindest einer der Kupplungsteile (14, 16) und vorzugsweise der zweite Kupplungsteil (16) in einer Ebene parallel zur Einsetzrichtung (X) beweglich ist.

4. Abwasserhebeanlage nach einem der vorangehenden Ansprüche, **dadurch gekennzeichnet, dass** zumindest einer der Kupplungsteile (14, 16) um zumindest eine Schwenkachse schwenkbeweglich ist.

5. Abwasserhebeanlage nach einem der vorangehenden Ansprüche, **dadurch gekennzeichnet, dass** der zweite Kupplungsteil (16) um zumindest eine Schwenkachse schwenkbeweglich ist.

6. Abwasserhebeanlage nach Anspruch 4 oder 5, **dadurch gekennzeichnet, dass** die zumindest eine Schwenkachse sich in der oder parallel zu der Dichtebene erstreckt, in welcher die beiden Kupplungsteile (14, 16) miteinander in Kontakt sind.

7. Abwasserhebeanlage nach einem der vorangehenden Ansprüche, **dadurch gekennzeichnet, dass** der zweite Kupplungsteil (16) zwei zueinander und zu der Einsetzrichtung (X) parallele Führungen (28) aufweist, in welche der erste Kupplungsteil (14) in Einsetzrichtung (X) einschiebbar ist.

## Claims

1. A waste water lifting installation with a container (2) and at least one pump assembly (6) arranged therein, wherein the pump assembly (6) comprises an outlet union (13) which is connected to an outlet conduit (8), wherein the pump assembly (6) is inserted through an opening in a wall of the container into this in a manner in which it may be removed again, and the outlet union (13) is connected to the outlet conduit (8) via a coupling (14, 16) which is releasable in the insertion direction (X) of the pump assembly (6), and wherein the coupling comprises a first coupling part (14) on the outlet union (13), and a second coupling part (16) on the outlet conduit (8), which are releasably engaged with one another, **characterized in that** the second coupling part (16) are moveable in a manner such that it may align itself automatically to the other coupling part (14), wherein the exit conduit (8) at least in sections is designed in an elastically deformable manner at its end is connected to the second coupling part (16) and is mounted in a mounting (36) in the inside of the container (2), wherein the mounting (36) is designed in a manner such that the movement ability of the second coupling part (16) is ensured at the exit conduit (8).

2. A waste water lifting installation according to claim 1, **characterised in that** the first coupling part (14) and the second coupling part (16) are in contact with one another in a sealing plane which extends parallel to the insertion direction (X).

3. A waste water lifting installation according to one of the preceding claims, **characterised in that** at least one of the coupling parts (14, 16) and preferably the second coupling part (16) is movable in a plane parallel to the insertion direction (X).

4. A waste water lifting installation according to one of the preceding claims, **characterised in that** at least one of the coupling parts (14, 16) and preferably the second coupling part (16) is pivotably movable about at least one pivot axis.

5. A waste water lifting installation according to one of the preceding claims, **characterized in that** the second coupling part (16) is pivotably movable about at least one pivot axis.

6. A waste water lifting installation according to claim 4 or 5, **characterised in that** the at least one pivot axis extends in the sealing plane or parallel to the sealing plane, in which sealing plane the two coupling parts (14, 16) are in contact with one another.

7. A waste water lifting installation according to one of the preceding claims, **characterised in that** the second coupling part (16) comprises two guides (28) which are parallel to one another and to the insertion direction (X) and into which the first coupling part (14) may be inserted in the insertion direction (X).

## Revendications

1. Installation de relevage d'eaux usées, comprenant un réservoir (2) et au moins un groupe motopompe (6) disposé dans celui-ci, dans laquelle le groupe motopompe (6) présente une tubulure de sortie (13) reliée à un conduit de sortie (8), le groupe motopompe (6) étant inséré de manière amovible dans le réservoir à travers une ouverture pratiquée dans une paroi de celui-ci et la tubulure de sortie (13) étant reliée au conduit de sortie (8) par l'intermédiaire d'un accouplement (14, 16) libérable dans la direction d'insertion (X) du groupe motopompe (6) et l'accouplement présentant une première partie d'accouplement (14) sur la tubulure de sortie (13) et une seconde partie d'accouplement (16) sur le conduit de sortie (8), lesquelles sont mutuellement en prise de manière libérable,
**caractérisée en ce que** la seconde partie d'accouplement (16) est mobile de façon à pouvoir s'aligner automatiquement sur l'autre partie d'accouplement (14), le conduit de sortie (8) étant réalisé, au moins par sections, de manière élastiquement déformable, relié en son extrémité à la seconde partie d'accouplement (16) et monté dans un logement (36) à l'intérieur du réservoir (2), le logement (36) étant conçu de manière à garantir la mobilité de la seconde partie d'accouplement (16) en l'extrémité du conduit de sortie (8).

2. Installation de relevage d'eaux usées selon la revendication 1, **caractérisée en ce que** la première partie d'accouplement (14) et la seconde partie d'accouplement (16) sont en contact l'une avec l'autre dans un plan d'étanchéité qui s'étend parallèlement à la direction d'insertion (X).

3. Installation de relevage d'eaux usées selon l'une des revendications précédentes, **caractérisée en ce qu'**au moins l'une des parties d'accouplement (14, 16) et, de préférence, la seconde partie d'accouplement (16) est mobile dans un plan parallèle à la direction d'insertion (X).

4. Installation de relevage d'eaux usées selon l'une des revendications précédentes, **caractérisée en ce qu'**au moins l'une des parties d'accouplement (14, 16) est mobile en pivotement autour d'au moins un axe de pivotement.

5. Installation de relevage d'eaux usées selon l'une des revendications précédentes, **caractérisée en ce que** la seconde partie d'accouplement (16) est mobile en pivotement autour d'au moins un axe de pivotement.

6. Installation de relevage d'eaux usées selon la revendication 4 ou 5, **caractérisée en ce que** ledit axe de pivotement, au moins au nombre de un, s'étend dans le plan d'étanchéité ou parallèlement au plan d'étanchéité dans lequel les deux parties d'accouplement (14, 16) sont en contact réciproque.

7. Installation de relevage d'eaux usées selon l'une des revendications précédentes, **caractérisée en ce que** la seconde partie d'accouplement (16) présente deux guides (28) parallèles entre eux et à la direction d'insertion (X), dans lesquels peut être insérée la première partie d'accouplement (14) dans la direction d'insertion (X).
